# EUROPÄISCHE PATENTSCHRIFT

(11) **EP 0 890 480 B1**
(45) Veröffentlichungstag und Bekanntmachung des Hinweises auf die Patenterteilung: **17.03.2004**
(21) Anmeldenummer: 98112338.3
(22) Anmeldetag: 03.07.1998
(51) Int. Cl.: B60R 11/00, B60H 1/34

(54) **Einbaumodul für Fahrgastzellen in Fahrzeugkarosserien**
Module for motor vehicle passenger compartments
Module pour habitacles de carosseries pour véhicules

(30) Priorität: 12.07.1997 DE 19729898
(43) Veröffentlichungstag der Anmeldung: 13.01.1999
(73) Patentinhaber: DaimlerChrysler AG, 70567 Stuttgart (DE)
(72) Erfinder: Gerber, Ulrich, 72218 Wildberg (DE); Niessner, Harry, 71034 Böblingen (DE)

(56) Entgegenhaltungen:
- DE-C- 4 138 613
- PATENT ABSTRACTS OF JAPAN vol. 009, no. 139 (M-387), 14. Juni 1985 -& JP 60 018414 A (NISSAN JIDOSHA KK), 30. Januar 1985

## Beschreibung

Die Erfindung betrifft eine Belüftungsdüse für Fahrgastzellen in Fahrzeugkarosserien gemäß dem Oberbegriff des Patentanspruchs 1.

Eine solche Belüftungsdüse ist aus der JP 60 018 414 bekannt. Die dort gezeigte Belüftungsdüse weist zwei miteinander lösbar verbundene Modulteile auf.

Die DE 41 38 613 C1 zeigt eine Belüftungsvorrichtung mit einer Lüftdüse, die zwei miteinander verrastende Modulteile aufweist.

Fahrgastzellen oder Fahrgastinnenräume, insbesondere in Kraftfahrzeugen, sind mit einer Vielzahl von Einbaumodulen ausgestattet, die mit ihren vielfältigen Funktionen einen wesentlichen Beitrag zur Verkehrssicherheit und dem Wohlbefinden der Fahrgastinsassen leisten. Diese Einbaumodule sind ortsfest platziert und zu ihrer Festlegung an einem oder mehreren Anbauteilen an der Fahrzeugkarosserie innerhalb der Fahrgastzelle befestigt.

Bei einem Unfall können sich die Platzverhältnisse in der Fahrgastzelle verändern und die zueinander festen Anbauteile sich verwinden oder relativ zueinander verschieben. Ein Beispiel hierfür ist die bei Frontalcrash mögliche Verschiebung des Klimakastens in die Fahrgastzelle hinein, was zum Verbiegen von Karosseriewandteilen und unkontrollierbaren Verlagerungen von mit diesen verbundenen Anbauteilen führt. Zwischen und innerhalb dieser Anbauteile müssen daher Ausweichmöglichkeiten gegeben sein. Sind Belüftungsdüsen mit solchen Anbauteilen verbunden, so werden diese bei im Crashfall vorkommenden Verschiebungen, Verlagerungen, Verdrehungen und/oder Verwindungen der Anbauteile undefiniert zerstört oder aus ihrer Befestigungsebene gerissen und stellen als scharfkantige oder lose umherfliegende Teile ein nicht unerhebliches Gefährdungspotenzial für die Fahrzeuginsassen dar.

Der Erfindung liegt die Aufgabe zugrunde, eine Belüftungsdüse für Fahrgastzellen der eingangs genannten Art so zu verbessern, dass sie bei durch Crash auftretenden Bauraumveränderungen in der Fahrgastzelle eine Verwindung, Verschiebung oder Verlagerung des oder der sie tragenden Anbauteile ermöglicht, ohne sich von ihm bzw. ihnen gewaltsam zu trennen, und dadurch einen Beitrag zum im Crashfall sicheren Fahrzeuginnenraum leistet.

Die Aufgabe ist bei einer Belüftungsdüse der im Oberbegriff des Patentanspruchs 1 definierten Gattung erfindungsgemäß durch die Merkmale im Kennzeichenteil des Patentanspruchs 1 gelöst.

Die erfindungsgemäße Belüftungsdüse hat den Vorteil, dass sie durch ihre nur geringen Kraftaufwand erfordernde Teilbarkeit eine Ausweichmöglichkeit für das oder die im Crashfall sich verwindenden oder sich relativ zueinander verlagernden Anbauteile, an dem oder denen sie befestigt ist, schafft, ohne dabei zerstört oder beschädigt zu werden. Nach definierter Trennung der Modulteile bleiben diese fest mit dem oder den Anbauteilen verbunden und gefährden nicht als lose umherfliegende Teile die Fahrzeuginsassen. Die Modulteile der Belüftungsdüse können an dem gleichen Anbauteil oder an verschiedenen Anbauteilen befestigt sein. Da die Trennung definiert ohne Zerstörung oder Beschädigung der Modulteile erfolgt, ist es in vielen Fällen möglich, nach Reparatur der Karosserie die Belüftungsdüse wieder zusammenzusetzen und weiter zu verwenden, so dass zusätzliche Kosteneinsparungen erzielt werden.

Zweckmäßige Ausführungen der erfindungsgemäßen Belüftungsdüse mit vorteilhaften Weiterbildungen und Verbesserungen der Erfindung sind in den weiteren Patentansprüchen angegeben.

Gemäß einer bevorzugten Ausführungsform der Erfindung sind jeweils zwei Modulteile längs einer gemeinsamen Trennlinie aneinander ansteckbar, wobei der eine Modulteil in den anderen formschlüssig einsteckbar ausgebildet ist. Zur definierten lösbaren Verbindung zwischen den Modulteilen sind in deren einander übergreifenden Teilbereichen Rastmittel vorgesehen, die beim Ineinanderstecken der Modulteile selbsttätig miteinander verrasten.

Gemäß einer bevorzugten Ausführungsform der Erfindung ist die Belüftungsdüse für die Innenraumbelüftung ausgeführt, die in die Instrumententafel eingesetzt wird. Der eine Modulteil ist dabei als ein einen Lufteinlassstutzen mit Luftklappen aufweisendes Grundgehäuse und der andere Modulteil als ein einen Luftführungskanal mit Luftaustrittsöffnung und vorzugsweise verstellbaren Luftleitelemente aufweisender Gehäuseaufsatz ausgebildet, wobei der Gehäuseaufsatz mit dem Endbereich seines Luftführungskanals in den vorderen Teil des Lufteinlassstutzens einsteckbar ausgebildet ist. Das Grundgehäuse wird dabei oben und der Gehäuseaufsatz unten an der Instrumententafel befestigt, wobei die Befestigungsmittel jeweils mindestens ein am Grundgehäuse bzw. am Gehäuseaufsatz ausgebildetes Durchsteckloch und durch die Durchstecklöcher hindurchgeführte Schrauben umfassen. Die Verrastung zwischen Grundgehäuse und Gehäuseaufsatz erfolgt über Rastöffnungen und Rastnasen, die wechselweise in den Wandungen von Luftführungskanal und Lufteinlasskanal ausgebildet sind.

Die Erfindung ist anhand eines in der Zeichnung dargestellten Ausführungsbeispiels im folgenden näher beschrieben. Es zeigen:
- Fig. 1: ausschnittweise eine perspektivische Darstellung der Vorderfront einer Fahrgastzelle in einer Fahrzeugkarosserie mit angebauter Instrumententafel und einer in der Instrumententafel integrierten Belüftungsdüse,
- Fig. 2: eine Frontansicht der Belüftungsdüse in Fig. 1,
- Fig. 3: eine Seitenansicht der Belüftungsdüse in Fig. 2,
- Fig. 4: einen Schnitt längs der Linie IV-IV in Fig. 2,
- Fig. 5: einen Schnitt längs der Linie V-V in Fig. 2.

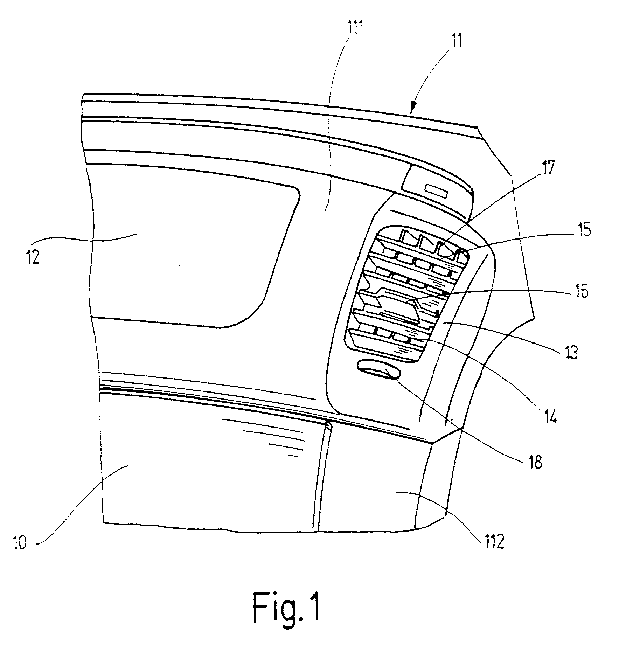

In Fig. 1 ist ausschnittweise die Vorderfront einer Fahrgastzelle in einer Karosserie eines Personenkraftwagens dargestellt. Die Vorderfront der Fahrgastzelle ist teilweise von einem Armaturenbrett oder einer Instrumententafel 11 abgedeckt. Die Instrumententafel 11 ist zweiteilig ausgebildet und weist einen oberen Tafelteil 111 und einen darunter sitzenden unteren Tafelteil 112 auf, die beide längs ihrer Ansatzkante fest miteinander verbunden sind. Im oberen Tafelteil 111 ist u.a. eine Airbagklappe 12 integriert und sind Belüftungsdüsen 13 für die Belüftung der Fahrgastzelle mit Frischluft oder temperierter Luft eingesetzt, von denen in Fig. 1 nur die rechte Seitendüse zu sehen ist. Der unter Tafelteil 112 enthält einen Handschuhkasten, von dem die Abdeckklappe 10 zu sehen ist, und weist einen hier nicht zu sehenden Knieschutz auf.

Die Belüftungsdüsen 13 sind an einem hinter der Instrumententafel 11 verlegtes Luftführungssystem angeschlossen, das mit einer Heizungs- oder Klimaanlage verbunden ist. In der mit der Oberfläche der Instrumententafel 11 bündigen Frontseite der Belüftungsdüse 13 ist eine Luftaustrittsöffnung 14 vorgesehen, in der eine Mehrzahl von etwa horizontal ausgerichteten Luftleitlamellen 15 schwenkbar angeordnet sind. Die Luftleitlamellen 15 lassen sich mittels eines auf einer mittleren Luftleitlamelle 15 festgelegten Betätigungsschiebers 16 gleichzeitig verschwenken, wobei alle Luftleitlamellen 15 einen etwa gleichen Schwenkwinkel gegenüber ihren zueinander parallel verlaufenden horizontalen Schwenkachsen 151 einnehmen. In Luftströmungsrichtung gesehen vor den horizontalen Luftleitlamellen 15 sind mehrere vertikal ausgerichtete, zueinander parallele Luftleitlamellen 17 vorgesehen, die ebenfalls mittels des Betätigungsschiebers 16 gleichzeitig um ihre horizontale Schwenkachsen 171 schwenkbar sind. Durch Schwenkung der Luftleitlamellen 15 und Luftleitlamellen 17 kann die Strömungsrichtung der aus der Belüftungsdüse 13 ausströmenden Luft eingestellt und verändert werden. Ein unterhalb der Luftaustrittsöffnung 14 liegendes, scheibenförmiges Stellrad 18 dient zur Betätigung einer die Luftzufuhr zur Belüftungsdüse 13 regelnden Luftklappe, so daß je nach Stellung des Stellrads 18 der aus der Luftaustrittsöffnung 14 der Belüftungsdüse 13 austretende Luftstrom von Null bis zu einem Maximum eingestellt werden kann.

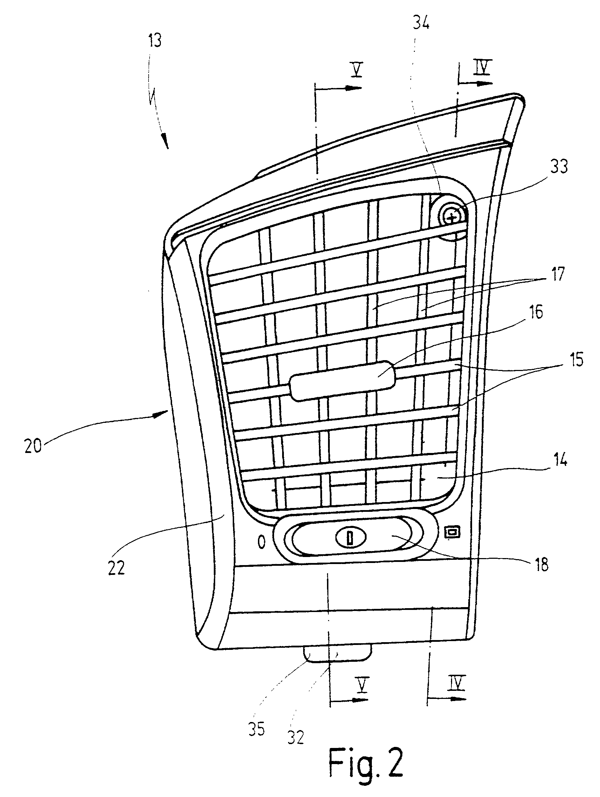

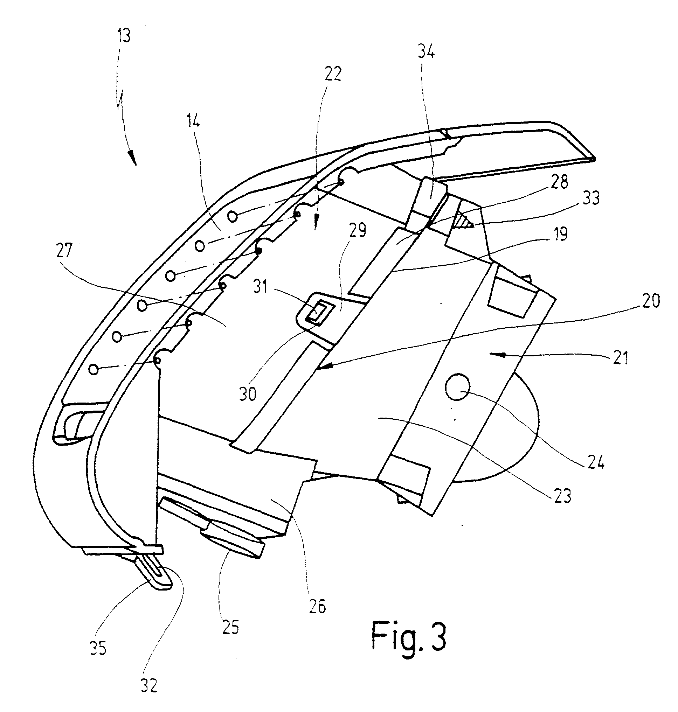

Der Aufbau der Belüftungsdüse 13 ist in Fig. 2 - 5 im einzelnen zu sehen. Die Belüftungsdüse 13 weist ein zweiteiliges Gehäuse 20 (Fig. 3 - 5) auf, das längs einer gemeinsamen Trennlinie 19 aus einem Grundgehäuse 21 und einem Gehäuseaufsatz 22 zusammengesetzt ist. Im Grundgehäuse 21 ist ein Lufteinlaßstutzen 23 zum Anschluß an das Luftführungssystem ausgebildet, in dem die hier nicht zu sehende Luftklappe zur Einstellung des die Belüftungsdüse 13 durchströmenden Luftstroms schwenkbeweglich gelagert ist. Die Schwenkachse der Luftklappe ist in Fig. 3 mit 24 bezeichnet. Die Luftklappe ist über ein hier nicht zu sehenden Schwenkhebel und eine mit 25 angedeutete Stift-Schlitz-Verbindung mit dem Stellrad 18 verbunden, das in einem an der Unterseite des Lufteinlaßstutzens 23 angeformten, nach vorn vorstehenden Hohlträger 26 um eine vertikale Drehachse so gelagert ist, daß ein Scheibenabschnitt des Stellrads 18 aus dem Hohlträger 26 herausragt.

Am Gehäuseaufsatz 22 ist ein Luftführungskanal 27 ausgebildet, der in der Luftaustrittsöffnung 14 mündet und die Lagerstellen für die vertikalen Luftleitlamellen 17 und die horizontalen Luftleitlamellen 15 trägt. An ihren einander zugekehrten Enden sind Lufteinlaßstutzen 23 und Luftführungskanal 27 so ausgebildet, daß sie ineinander formschlüssig einsteckbar sind, wobei der Lufteinlaßstutzen 23 den Luftführungskanal 27 mit einem Umlaufrand 28 übergreift. Zur lösbaren Verbindung von Grundgehäuse 21 und Gehäuseaufsatz 22 sind im oder nahe dem Übergreifungsbereich Rastmittel vorgesehen, die bei Ineinanderstecken von Luftführungskanal 27 und Lufteinlaßstutzen 23 mit Grundgehäuse 21 und Gehäuseaufsatz 22 miteinander verrasten. Wie aus Fig. 3 zu erkennen ist, weisen die Rastmittel Laschen 29 mit Rastöffnungen 30 und in letzteren einrastende Rastnasen 31 auf, die wechselseitig am Grundgehäuse 21 und am Gehäuseaufsatz 22 festgelegt sind. Im Ausführungsbeispiel der Fig. 3 sind die Laschen 29 einstückig an dem Lufteinlaßstutzen 23 angeformt und liegen in der Ebene des den Luftführungskanal 27 übergreifenden Umlaufrandes 28 am Lufteinlaßstutzen 23, während die Rastnasen 31 einstückig von der Außenwand des Luftführungskanals 27 abstehen. In Fig. 3 ist eine Lasche 29 mit Rastöffnung 30 und Rastnase 31 zu sehen. Auf der gegenüberliegenden Seite von Grundgehäuse 21 und Gehäuseaufsatz 22 sind zwei weitere Laschen 29 mit Rastöffnungen 30 und Rastnasen 31 vorgesehen, die im Abstand zueinander angeordnet sind.

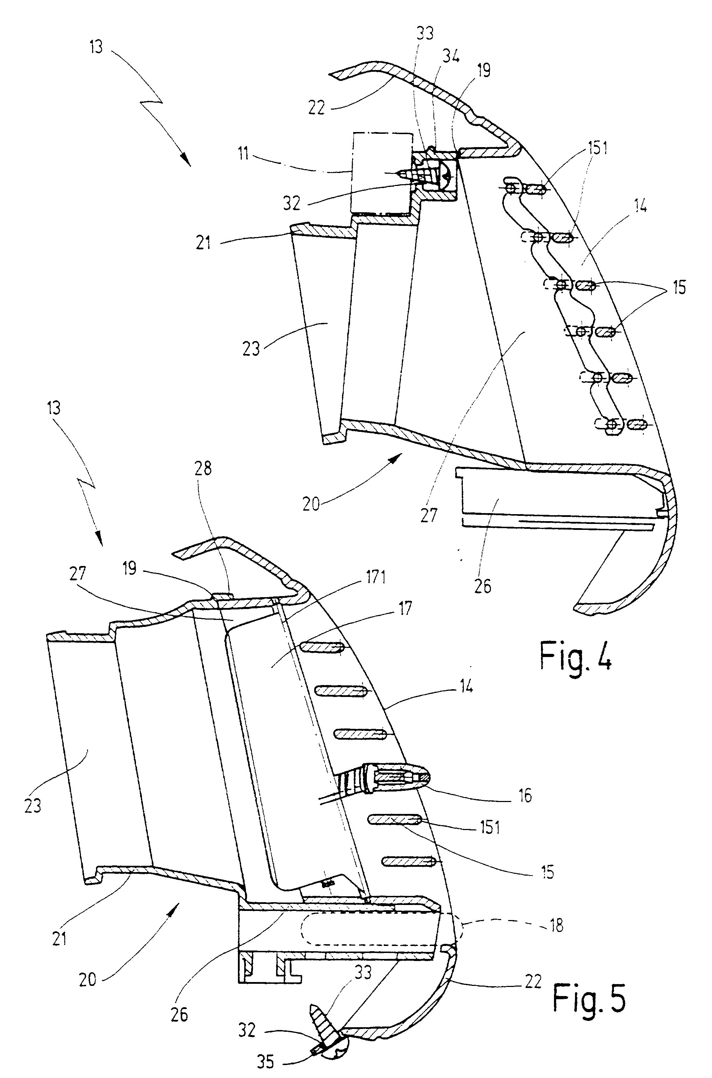

Zur Festlegung der Belüftungsdüse 13 in ihrer Einbaulage in der Instrumententafel 11 sind sowohl am Grundgehäuse 21 als auch am Gehäuseaufsatz 22 Befestigungsmittel vorhanden. Wie aus Fig. 2 - 5, insbesondere aus Fig. 4 und 5 ersichtlich ist, weisen die Befestigungsmittel jeweils ein Durchsteckloch 32 und eine durch das Durchsteckloch 32 hindurchgeführte Blechschraube 33 auf. Im Grundgehäuse 21 ist das Durchsteckloch 32 in einem an den Lufteinlaßstutzen 23 oben angeformten Ansatznocken 34 ausgebildet (Fig. 2, 3 und 4). An dem Gehäuseaufsatz 22 ist mittig an dessen die Instrumententafel 11 umgreifenden Unterseite eine Lasche 35 angeformt, in der das Durchsteckloch 32 ausgebildet ist (Fig. 2, 3 und 5). Mit der durch das Durchsteckloch 32 im Grundgehäuse 21 hindurchgesteckten Blechschraube 33 wird das Grundgehäuse 21 an dem oberen Tafelteil 111 der Instrumententafel 11 oben angeschraubt, was in Fig. 4 strichpunktiert angedeutet ist. Mit der durch das Durchsteckloch 32 im Gehäuseaufsatz 22 hindurchgesteckten Blechschraube 33 wird der mit dem Grundgehäuse 21 verrastete Gehäuseaufsatz 22 an dem oberen Tafelteil 111 der Instrumententafel 11 unten festgeschraubt.

Wenn im Crashfall sich die Instrumententafel 11 in der Fahrgastzelle verlagert, wobei die beiden Tafelteile 111,112 unterschiedliches Verlagerungsverhalten aufweisen, so können durch die Festlegung des oberen Tafelteils 111 am unteren Tafelteil 112 Verwindungen und Verdrehungen des oberen Tafelteils 111 im Bereich zwischen dem oberen und unteren Befestigungspunkt der Belüftungsdüse 13 auftreten. Infolge dieses Spannungsaufbaus zwischen den Befestigungspunkten löst sich die durch die Rastöffnungen 30 und Rastnasen 31 hergestellte Rastverbindung zwischen dem Grundgehäuse 21 und dem Gehäuseaufsatz 22, und Lufteinlaßstutzen 23 und Luftführungskanal 27 werden voneinander abgezogen.

Durch diese konstruktive Zweiteiligkeit der Belüftungsdüse 13 schafft die Belüftungsdüse 13 definierte Ausweichmöglichkeiten für die Verwindung oder Verdrehung der Instrumententafel 11 infolge Crash, ohne dass die Belüftungsdüse 13 zerstört oder von dem sich verwindenden Teil abgerissen wird und als die Fahrzeuginsassen gefährdendes, loses Teil im Fahrzeuginnenraum umherfliegt. Da bei der Verschiebung ihrer Befestigungsebenen Grundgehäuse 21 und Gehäuseaufsatz 22 zerstörungsfrei voneinander getrennt werden, kann die Belüftungsdüse 13 nach Wiederzusammensetzen von Grundgehäuse 21 und Gehäuseaufsatz 22 weiterverwendet werden.

## Patentansprüche

1. Belüftungsdüse für Fahrgastzellen in Fahrzeugkarosserien, die aus mindestens zwei miteinander lösbar verbundenen Modulteilen (21, 22) zusammengesetzt ist und Befestigungsmittel zur Fixierung ihrer Einbaulage an Anbauteilen der Fahrzeugkarosserie aufweist,
wobei an jedem Modulteil (21, 22) mindestens ein Befestigungsmittel (32, 33) zur Befestigung an einem Anbauteil (111) angeordnet ist
**dadurch gekennzeichnet,**
**dass** ein Modulteil von einem Lufteinlassstutzen (23) mit Luftklappe aufweisenden Grundgehäuse (21) und ein Modulteil von einem Luftführungskanal (27) mit Luftaustrittsöffnung (14) und Luftleitlamellen (15, 17) aufweisenden Gehäuseaufsatz (22) gebildet ist.

2. Belüftungsdüse nach Anspruch 1,
**dadurch gekennzeichnet,**
**dass** das als Grundgehäuse (21) ausgebildete Modulteil und das als Gehäuseaufsatz (22) ausgebildete Modulteil längs einer gemeinsamen Trennlinie (19) aneinander ansteckbar sind.

3. Belüftungsdüse nach Anspruch 2,
**dadurch gekennzeichnet,**
**dass** das als Gehäuseaufsatz (22) ausgebildete Modulteil in den das als Grundgehäuse (21) ausgebildeten Modulteil einsteckbar ausgebildet ist.

4. Belüftungsdüse nach Anspruch 3,
**dadurch gekennzeichnet,**
**dass** zwischen den einander übergreifenden Teilbereichen der Modulteile (21, 22) Rastmittel (39, 31) vorgesehen sind, die beim Ineinanderstecken der Modulteile selbsttätig verrasten.

5. Belüftungsdüse nach einem der Ansprüche 1 bis 4,
**dadurch gekennzeichnet,**
**dass** der Lufteinlassstutzen (23) im Grundgehäuse (21) mit seinem dem Gehäuseaufsatz (22) zugekehrten vorderen Ende das ihm zugekehrte Ende des Luftführungskanals (27) am Gehäuseaufsatz (22) längs der Trennlinie (19) mit einem Umlaufrand (28) formschlüssig übergreift.

6. Belüftungsdüse nach einem der Ansprüche 1 bis 5,
**dadurch gekennzeichnet,**
**dass** die am Grundgehäuse (21) und am Gehäuseaufsatz (22) vorhandenen Befestigungsmittel (32, 33) zur Festlegung an einer Instrumententafel (11) ausgebildet sind, wobei die dem Grundgehäuse (21) zugeordneten Befestigungsmittel (32, 33) oben und die dem Gehäuseaufsatz (22) zugeordneten Befestigungsmittel (32, 33) unten an der Instrumententafel (11) liegen.

7. Belüftungsdüse nach Anspruch 6,
**dadurch gekennzeichnet,**
**dass** die Befestigungsmittel mindestens ein in dem Grundgehäuse (21) einerseits und in dem Gehäuseaufsatz (22) andererseits jeweils ausgebildetes Durchsteckloch (32) und durch die Durchstecklöcher (32) hindurchgeführte Schrauben (33) aufweisen.

8. Belüftungsdüse nach einem der Ansprüche 1 bis 7,
**dadurch gekennzeichnet,**
**dass** die Rastmittel zwischen Grundgehäuse (21) und Gehäuseaufsatz (22) in Laschen (29) ausgebildete Rastöffnungen (30) und in die Rastöffnungen (30) einrastende Rastnasen (31) aufweisen und dass die Laschen (29) und Rastnasen (31) wechselweise am Grundgehäuse (21) und am Gehäuseaufsatz (22), vorzugsweise einstückig mit diesen, ausgebildet sind.

9. Belüftungsdüse nach Anspruch 8,
**dadurch gekennzeichnet,**
**dass** die Laschen (29) in der Ebene des Umlaufrands (28) am Lufteinlassstutzen (23) des Grundgehäuses (21) liegen und von diesem einstückig in Richtung zum Gehäuseaufsatz (22) hin abstehen und dass die Rastnasen (31) außen am Luftführungskanal (27) des Gehäuseaufsatzes vorstehen.

## Claims

1. Ventilation air-outlet for passenger compartments in vehicle bodies, assembled from two modules (21, 22) connected together but detachable from one another, and fastening means for fixing their fitting position on mountings of the vehicle body, such that at least one fastener (32, 33) is arranged on each module (21, 22) to fasten it to a mounting (111),
**characterised in that**
one module is in the form of a basic housing (21) with an air inlet connection piece (23) having an air valve, and one module is in the form of a housing attachment (22) comprising an air duct (27) with an air outlet opening (14) with air baffles (15, 17).

2. Ventilation air-outlet according to Claim 1,
**characterised in that**
the module formed as a basic housing (21) and the module formed as a housing attachment (22) can be fixed to one another along a common parting line (19).

3. Ventilation air-outlet according to Claim 2,
**characterised in that**
the module formed as the housing attachment (22) is formed so that it can be fixed to the module formed as the basic housing (21).

4. Ventilation air-outlet according to Claim 3,
**characterised in that**
between the parts of the modules (21, 22) that overlap with one another, detent elements (39, 31) are provided which automatically engage when the modules are brought together.

5. Ventilation air-outlet according to any of Claims 1 to 4,
**characterised in that**
the air inlet connection piece (23) in the basic housing (21), with its front end facing towards the housing attachment (22), projects in a form-locked way into the end of the air duct (27) in the housing attachment (22) facing it, along a parting line (19) with a circumferential rim (28).

6. Ventilation air-outlet according to any of Claims 1 to 5,
**characterised in that**
the fastening means (32, 33) provided on the basic housing (21) and on the housing attachment (22) are formed to enable fixing to an instrument panel (11), such that the fastening means (32, 33) associated with the basic housing (21) are positioned in the upper area of the instrument panel (11) and the fastening means (32, 33) associated with the housing attachment (22) are positioned in the lower area thereof.

7. Ventilation air-outlet according to Claim 6,
**characterised in that**
the fastening means comprise at least one through-hole (32) formed in the basic housing (21) on the one hand and in the housing attachment (22) on the other hand, with screws (33) passing through the said through-holes (32).

8. Ventilation air-outlet according to any of Claims 1 to 7,
**characterised in that**
the detent means between the basic housing (21) and the housing attachment (22) comprise detent openings (30) formed in strips (29) and detent pawls (31) that catch in the said detent openings (30), and the said strips (29) and detent pawls (31) can be formed in alternation on the basic housing (21) and on the housing attachment (22), preferably as one piece therewith.

9. Ventilation air-outlet according to Claim 8,
**characterised in that**
the strips (29) are in the plane of the circumferential rim (28) on the air inlet connection piece (23) of the basic housing (21) and extend therefrom in one piece towards the housing attachment (22), and the detent pawls (31) project outwards on the air duct (27) of the housing attachment.

## Revendications

1. Tuyère d'aération pour cellules de passagers dans les carrosseries de véhicule, composée d'au moins deux éléments de modules (21, 22) joints de façon démontable, et présentant un moyen de fixation pour la fixation de leur position de montage sur des pièces rapportées de la carrosserie du véhicule, moyennant quoi sur chaque élément de module (21, 22) est disposé au moins un moyen de fixation (32, 33) pour sa fixation sur une pièce rapportée (111), **caractérisée en ce qu'**un élément de module est constitué d'une tubulure d'entrée d'air (23) avec bâti de base (21) présentant un volet d'aération, et un élément de module est constitué d'un couronnement de bâti (22) présentant un canal de déflexion d'air (27) avec un orifice de sortie d'air (14) et des lamelles de canalisation d'air (15, 17).

2. Tuyère d'aération selon la revendication 1, **caractérisée en ce que** l'élément de module formé comme bâti de base (21) et l'élément de module (21, 22) formé comme couronnement de bâti (22) sont fixables l'un à l'autre le long d'une ligne séparatrice commune (19).

3. Tuyère d'aération selon la revendication 2, **caractérisée en ce que** l'élément de module qui est formé comme couronnement de bâti (22) est formé de manière à être enfichable dans le bâti de base (21).

4. Tuyère d'aération selon la revendication 3, **caractérisée en ce que** entre les secteurs partiels des éléments de module (21, 22) se chevauchant les uns les autres, sont prévus des moyens d'encliquetage (39, 31) qui s'enclenchent automatiquement quand les éléments de module (21, 22) sont enfichés l'un dans l'autre.

5. Tuyère d'aération selon l'une des revendications 1 à 4, **caractérisée en ce que** la tubulure d'entrée d'air (23) du bâti de base (21), par son extrémité antérieure orientée sur le couronnement de bâti (22), chevauche mécaniquement à l'aide d'une bordure tournante (28), l'extrémité orientée vers elle du canal de déflexion d'air (27), à proximité du couronnement de bâti (22) le long de la ligne séparatrice (19).

6. Tuyère d'aération selon l'une des revendications 1 à 5, **caractérisée en ce que** les matériels de fixation (32, 33) existant à proximité du bâti de base (21) et à proximité du couronnement de bâti (22) sont formés pour être fixés à un tableau de bord (11), cependant que les matériels de fixation (32, 33) correspondant au bâti de base (21) sont situés dans le haut et que les matériels de fixation (32, 33) correspondant au couronnement de bâti (22) sont situés dans le bas du tableau de bord (11).

7. Tuyère d'aération selon la revendication 6, **caractérisée en ce que** les matériels de fixation présentent au moins un perçage traversant (32) et des vis passées à travers ces perçages traversants (32) aménagés chaque fois dans le bâti de base (21) d'une part et dans le couronnement de bâti (22) d'autre part.

8. Tuyère d'aération selon l'une des revendications 1 à 7, **caractérisée en ce que** les moyens d'encliquetage présentent entre le bâti de base (21) et le couronnement de bâti (22) des ouvertures d'encliquetage (30) formées en languette (29) et dans les ouvertures d'encliquetage (30) des taquets d'encliquetage (31) qui s'enclenchent, et **en ce que** les languettes (29) et taquets d'encliquetage (31) sont formés alternativement sur le bâti de base (21) et sur le couronnement de bâti (22), de préférence en une seule pièce avec ceux-ci.

9. Tuyère d'aération selon la revendication 8, **caractérisée en ce que** les languettes (29) se trouvent dans le plan de la bordure tournante (28), à proximité de la tubulure d'entrée d'air (23) du bâti de base (21), et qu'elles s'éloignent de celle-ci en une seule pièce, en direction du couronnement de bâti (22), et **en ce que** les taquets d'encliquetage (31) font saillie à l'extérieur, sur le canal de déflexion d'air (27) du couronnement de bâti.
